# EUROPEAN PATENT SPECIFICATION

(11) **EP 0 758 592 B1**
(45) Date of publication and mention of the grant of the patent: **22.03.2000**
(21) Application number: 95305659.5
(22) Date of filing: 14.08.1995
(51) Int. Cl.: B60N 2/22

(54) **Reclining mechanism for vehicle seat**
Neigungsverstellmechanismus für Fahrzeugsitze
Mécanisme d'inclinaison pour sièges de véhicules

(43) Date of publication of application: 19.02.1997
(73) Proprietor: ARACO KABUSHIKI KAISHA, Toyota-shi, Aichi-ken (JP)
(72) Inventor: Maruta, Tsutomu, 33-7 Araimaehigashi, Aza, Higashi kamo-gun, Aichi-ken (JP); Tatematsu, Kazuhisa, Nagoya-shi, Aichi-ken (JP)
(74) Representative: Chettle, Adrian John

(56) References cited:
- DE-A- 2 829 701
- DE-A- 4 441 159
- GB-A- 2 241 884
- GB-A- 2 284 987

## Description

The present invention relates to a reclining mechanism for a vehicle seat which is assembled with the rear portion of a frame structure of a seat cushion and connected to the lower end of a frame structure of a back rest to support the back rest at an inclined angle relative to the seat cushion.

As one of reclining mechanisms of this kind, there has been proposed a reclining mechanism of the type which includes a lower arm member for attachment to a frame structure of a seat cushion, an upper arm member for attachment to a frame structure of a back rest and connected to the lower arm member to support the back rest at an inclined angle, a ratchet integral with one of the arm members, a pawl element supported on the other arm member to be moved toward and away from a semi-circular toothed portion of the ratchet, resilient means for biasing the pawl element toward the toothed portion of the ratchet for engagement therewith, and an operation lever connected to the pawl element to move the pawl element against the biasing force of the resilient means for disengagement from the toothed portion of the ratchet.

In the conventional reclining device described above, the pawl element is rotatably supported on the arm member to be moved toward and away from the toothed portion of the ratchet or slidably supported on the arm member to be translated toward and away from the toothed portion of the ratchet. In such a mounting construction of the pawl element, the support portion of the pawl element is deformed if the back rest is applied with an excessive load. This causes undesired lateral slide or damage at the engagement portion of the pawl element with the ratchet.

It is, therefore, a primary object of the present invention to provide an improved reclining device capable of avoiding such undesired lateral slide or damage at the engagement portion of the pawl element with the ratchet even if the back rest is applied with an excessive load.

GB-A-2241884 discloses a seat reclining mechanism having the feature of the pre-characterising portion of claim 1 appended hereto.

According to the present invention, there is provided a reclining mechanism for a vehicle seat including a lower arm member for attachment to a frame structure of a seat cushion, an upper arm member for attachment to a frame structure of a back rest and connected to the lower arm member to support the back rest at an inclined angle relative of the seat cushion, a ratchet integral with one of the arm members, a pawl element supported on the other arm member to be moved toward and away from a semi-circular toothed portion of the ratchet, resilient means for biasing the pawl element toward the toothed portion of the ratchet for engagement therewith, and an operation lever operatively connected to the pawl element to move the pawl element against a biasing force of the resilient means for disengagement from the toothed portion of the ratchet, wherein the lower arm member is composed of a pair of arm members each formed with a recessed portion located at their insides and coupled with each other in such a manner that the ratchet and the pawl element are contained within a space formed between the recessed portions and supported by slidable engagement with internal surfaces of the recessed portions, characterised in that at least one of the arm members is formed at its inside with a cylindrical projection concentric with the rotary fulcrum of the upper arm member for slidable engagement with the ratchet.

In a practical embodiment of the present invention, each recessed portion of the arm members is composed of a semi-circular recessed portion formed concentrically with the rotary fulcrum of the upper arm member to contain the ratchet and a rectangular recessed portion extended from semi-circular recessed portion perpendicularly to a tangent of the semi-circular toothed portion of the ratchet and formed to contain the pawl element, and wherein the pawl element is formed with a cam hole in which located is a cam portion of a cam shaft rotatably supported from the arm members and connected at one end thereof with the operation lever.

For a better understanding of the present invention, and to show how the same may be carried into effect, reference will now be made, by way of example, to the accompanying drawings, in which:
Fig. 1 is a side view of a left-hand reclining device for attachment to the left side of a vehicle seat in a first embodiment of a reclining mechanism in accordance with the present invention;
Fig. 2 is a sectional view taken along line II-II in Fig. 1;
Fig. 3 is a perspective view illustrating disassembled component parts of the left-hand reclining device shown in Fig. 1;
Fig. 4 is a side view of a right-hand reclining device for attachment to the right side of the vehicle seat in the first embodiment;
Fig. 5 is a side view partly illustrating the left-hand reclining device in a released condition of an operation lever:
Fig. 6 is a side view partly illustrating the right-band reclining device in a released condition of the operation lever;
Fig. 7 is a side view partly illustrating the left-hand reclining device in a condition where a back rest of the vehicle seat has been adjusted to a rearward inclined position:
Fig. 8 is a side view partly illustrating the left-hand reclining device in a condition where the back rest has been adjusted to a forward inclined position;
Fig. 9 is a side view of a modification of the left-hand reclining device shown in Figs. 1 and 2;
Fig. 10 is a sectional view taken along line X-X in Fig. 9;
Fig. 11 is a side view partly illustrating the left-hand reclining device in a released condition of the operation lever shown in Fig. 9;
Fig. 12 is a side view of another modification of the left-hand reclining device shown in Figs. 1 and 2;
Fig. 13 is a sectional view taken along line XIII-XIII in Fig. 12;
Fig. 14 is a side view partly illustrating the left-hand reclining device in a released condition of the operation lever shown in Fig. 12; and
Fig. 15 is a side view of a left-hand reclining device in a second embodiment of a reclining mechanism in accordance with the present invention.

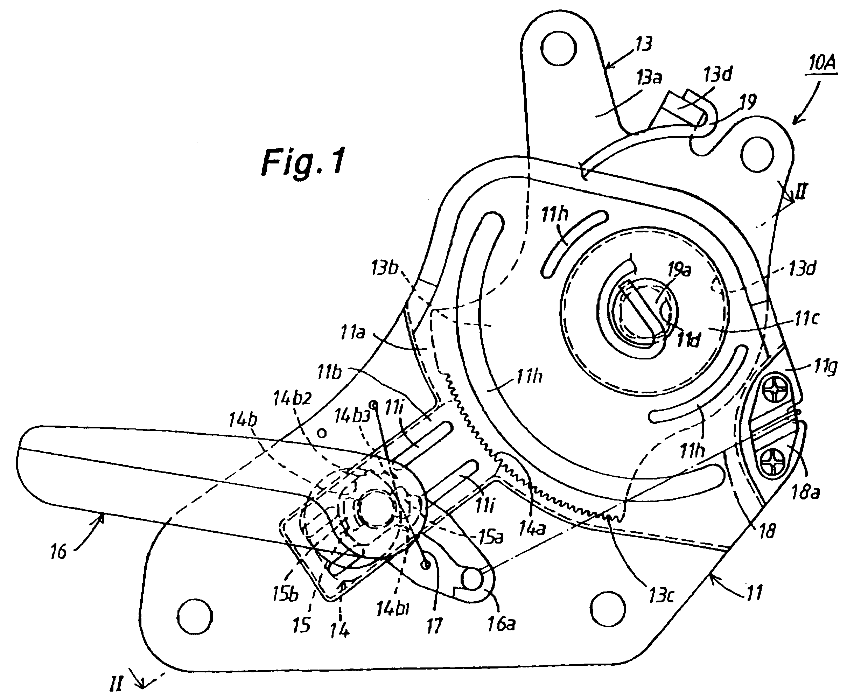

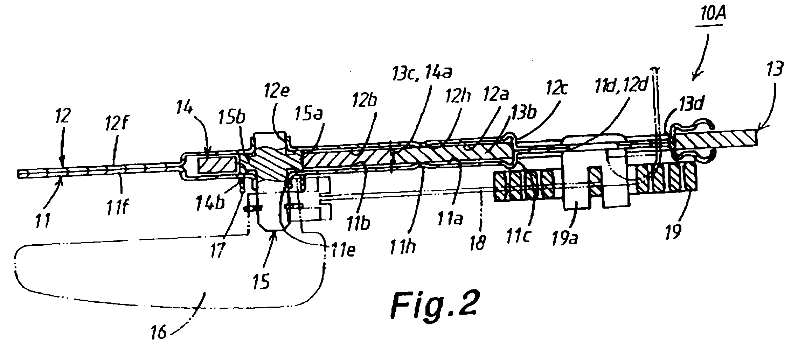

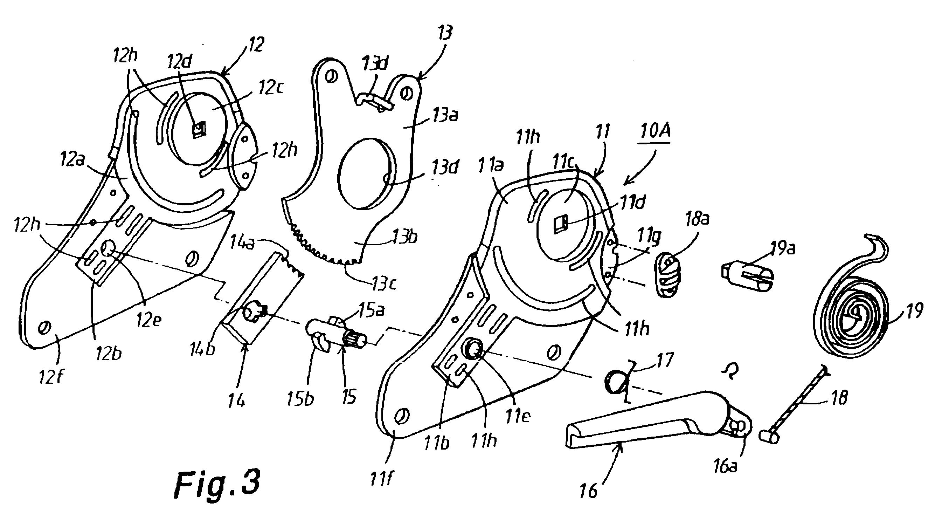

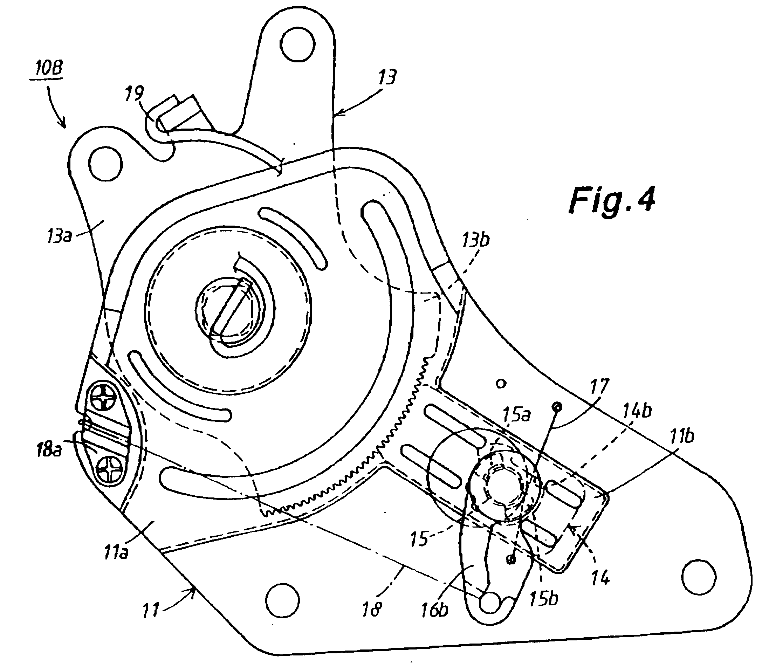

Illustrated in Figs. 1-4 of the drawings is a first embodiment of a reclining mechanism in accordance with the present invention which is composed of a left-hand reclining device 10A shown in Figs. 1 and 2 and a right-hand reclining device 10B shown in Fig. 4. The left-hand reclining device 10A comprises a pair of lower arm members 11 and 12, an upper arm member 13, a pawl element 14, a cam shaft 15, an operation lever 16, a coil spring 17, an operation cable 18 and a spiral spring 19. The lower arm members 11, 12 are made of sheet metal and formed at their insides with approximately semi-circular recessed portions 11a, 12a and rectangular recessed portions 11b, 12b which are protruded outwardly. The semi-circular recessed portions 11a, 12a are located at an upper portion of lower arm members 11, 12, and the rectangular recessed portions 11b, 12b are extended downward at a inclined angle from a lower intermediate portion of the semi-circular recessed portions 11a, 12a. The semi-circular recessed portions 11a, 12a of lower arm members 11, 12 are formed at their central portions with cylindrical projections 11c, 12c the internal portions of which are formed with through holes 11d, 12d and engaged with each other. The rectangular recessed portions 11b, 12b are located on a straight line radially crossing the center of through holes 11d, 12d and formed with through holes 11e, 12e at their central portions in a longitudinal direction.

The lower arm members 11 and 12 are coupled with each other in a condition where the upper arm member 13 and pawl element 14 are contained in each space formed by the semi-circular recessed portions 11a, 12a and formed by the rectangular recessed portions 11b, 12b. The coupled lower arm members 11, 12 are at their lower end portions 11f, 12f fixed to an upper rail of a seat track assembly (not shown) on which mounted is a seat cushion of a vehicle seat.

The upper arm member 13 is made of a thick sheet metal and formed with an arm portion 13a and a ratchet portion 13b. The ratchet portion 13b of upper arm member 13 is formed at its lower end with a semi-circular toothed portion 13c and at its center with a circular hole 13d the inner diameter of which is determined to correspond with the cylindrical projections 11c, 12c of the semi-circular recessed portions 11a, 12a. The ratchet portion 13b of upper arm member 13 is contained within the space between the semi-circular recessed portions 11a, 12a in such a manner that the circular hole 13d is coupled with the cylindrical projections 11c, 12c of lower arm members 11. 12. Thus, the upper arm member 13 is hinged with the lower arm members 11, 12 to be rotatable forwardly or backwardly about the circular projections 11c, 12c of lower arm members 11, 12.

The pawl element 14 is in the form of a rectangular pawl plate made of a thick sheet metal which is formed at its one end with a toothed portion 14a for meshing engagement with the toothed portion 13c of ratchet 13b and at its intermediate portion with a cam hole 14b. The pawl element 14 is contained within the space between the rectangular recessed portions 11b, 12b of lower arm members 11, 12 to be translated toward and away from the toothed portion 13c of ratchet 13b and is supported on the cam shaft 15 carried by the lower arm members 11, 12 at their through holes 11e and 12e.

The cam hole 14b of pawl element 14 is formed with circumferentially spaced projections 14b1 and 14b2 and a tapered cam surface 14b3 located between the projections 14b1 and 14b2. The cam shaft 15 has a pair of diametrically opposed cam portions 15a and 15b. The operation lever 16 is fixed to one end of the cam shaft 15, and the coil spring 17 is provided in surrounding relationship with the cam shaft 15 between the lower arm member 11 and operation lever 16 and engaged at one end thereof with an arm portion 16a of operation lever 16 and at the other end thereof with the lower arm member 11 to bias the cam shaft 15 counterclockwisely. Under the load of coil spring 17, the first cam portion 15a of cam shaft 15 is maintained in engagement with the tapered cam surface 14b3 of cam hole 14b to maintain the pawl element 14 in engagement with the toothed portion 13c of ratchet 13b. When the cam shaft 15 is rotated clockwisely by operation of the operation lever 16 against the load of coil spring 17, the first cam portion 15a is brought into engagement with the first projection 14b1 of cam hole 14b to retract the pawl element 14 backward while the second cam portion 15b is brought into engagement with the second projection 14b2 of cam hole 14b.

The operation cable 18 is connected to the arm portion 16a of operation lever 16 and extended toward the right-hand reclining device 10B through a cable guide 18a fixed to a rear portion 11g of the lower arm member 11 for connection to an operation arm 16b of the right-hand reclining device shown in Fig. 4. In the left-hand reclining device 10A, a support pin 19a is mounted to the through holes 11d, 12d of lower arm members 11, 12, and the spiral spring 19 is provided in surrounding relationship with the support pin 19a. The spiral spring 19 is engaged at one end thereof with the support pin 19a and at the other end thereof with a hook portion 13d of upper arm member 12 as shown in Fig. 1 to bias the upper arm member 12 forwardly (in a counterclockwise direction in Fig. 1)

As shown in Fig. 4, the right-hand reclining device 10B is constructed symmetrically with the left-hand reclining device 10A shown in Figs. 1 and 2. Thus, the same component parts and portions as those in the left-hand reclining device 10A are designated by the same reference numerals in the figure. In the right-hand reclining device 10B, the operation arm 16b is interconnected to the arm portion 16a of operation lever 16 by means of the operation cable 18, and a relationship between the cam hole 14b of pawl element 14 and the cam shaft 15 is arranged reversely to the left-hand reclining device 10A in a vertical direction so that the cam shaft 15 is rotated by a tension force applied to the operation cable 18 to move the pawl element 14 as in the left-hand reclining device 10A.

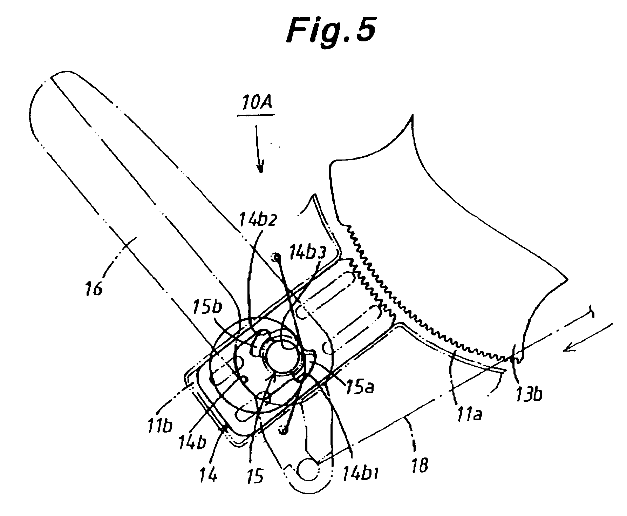

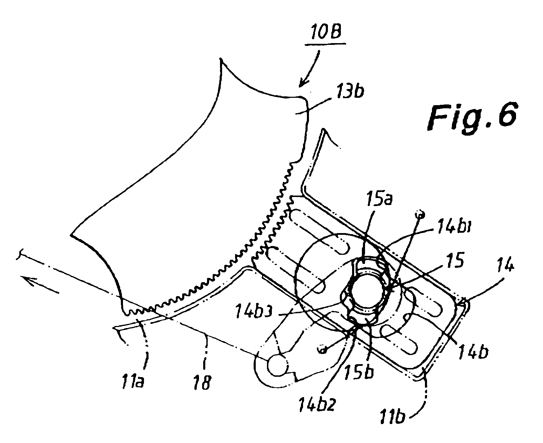

Assuming that in the reclining mechanism described above, the operation lever 16 and cam shafts 15 are positioned under the load of coil springs 17 as shown in Figs. 1 and 4, the pawl elements 14 are maintained in engagement with the toothed portions 13c of ratchets 13b to restrict forward movement of the upper arm members 13. Thus, the back rest fixed to the upper arm members 13 is locked at an inclined angle relative to the seat cushion. When the operation lever 15 of the left-hand reclining device 10A is operated in a clockwise direction against the biasing forces of coil springs 17 as shown in Fig. 5, the operation cable 18 is pulled in a direction shown by an arrow in the figure to rotate the operation arm 16b of the right-hand reclining device 10B clockwisely as shown in Fig. 6. As a result, the first cam portions 15a of cam shaft 15 in both the reclining devices 10A and 10B are engaged with the first projections 14b1 of cam holes 14b to retract the pawl elements 14 from the toothed portions 13c of ratchets 13b. Thus, the lock of the upper arm members 13 to the lower arm members 11, 12 is released to permit adjustment of the inclined angle of the back rest. In this condition, the second cam portions 15b of cam shafts 15 are engaged with the second projections 14b2 of cam holes 14b to restrict further clockwise rotation of the operation lever 16.

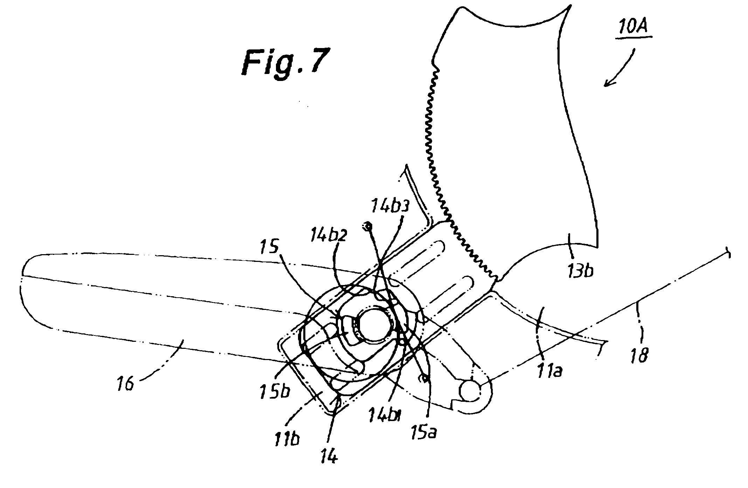

In Fig. 7 there is illustrated a locked condition of the back rest at a maximum backwardly inclined angle where backward rotary movement of the upper arm members 13 is restricted by engagement with the guide members 18a fixed to each rear portion 11g of the lower arm members 11. In such a locked condition, the first cam portions 16a of cam shafts 15 are engaged with the tapered cam surfaces 14b3 of cam holes 14b to maintain the pawl elements 14 in engagement with the toothed portions 13c of ratchets 13b. Thus, the back rest integral with the left and right upper arm members 13 is locked at the inclined angle.

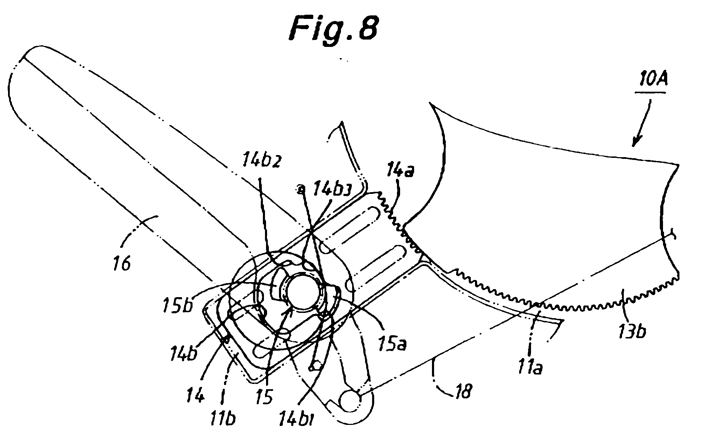

In Fig. 8 there is illustrated a released condition of the back rest at a maximum forwardly inclined angle where forward rotary movement of the upper arm member 13 is restricted by engagement with the guide members 18a fixed to each rear portion 11g of the lower arm members 11. When the effect applied to the operation lever 16 is released in such a released condition as described above, the cam shafts 15 are rotated by the biasing forces of coil springs 17 counterclockwisely to move the pawl elements 14 toward the ratchets 13c. In this instance, the toothed portions 14a of pawl elements 14 are brought into engagement with each non-toothed shoulder of the ratchets 13b in a condition where backward rotary movement of the back rest is restricted under the load of spiral springs 19.

In the respective reclining devices 10A and 10B, the lower arm members 11, 12 are formed at their semi-circular recessed portions 11a, 12a with plural semi-circular inward projections 11h, 12h for slidable engagement with the ratchet portion 13b of upper arm member 13 and at their rectangular recessed portions 11b, 12b with plural parallel inward projections 11h, 12h for slidable engagement with the pawl element 14. This is useful to ensure smooth movement of the upper arm member 13 and pawl clement 14 relative to the lower arm members 11, 12 and to enhance support stiffness of the lower arm members 11, 12.

Since in the reclining devices 10A, 10B, the ratchet portion 13b of upper arm member 13 and pawl element 14 are supported by slidable engagement with the lower arm members 11, 12 at their recessed portions 11a, 11b, 12a, 12b, an excessive load applied to the back rest is received by the internal vertical surfaces of lower arm members 11, 12. Thus, even if the excessive load acts on the engagement portion of the pawl element 14 and the toothed portions 13c of ratchet 13b, there will not occur any undesired lateral slide at the engagement portion of the pawl element 14 with the ratchet 13b. This is useful to avoid damage of the toothed portions of ratchet portion 13b and pawl element 14. It is also noted that in the reclining devices 10A, 10B the ratchet portion 13b of upper arm member 13 is supported by slidable engagement with the cylindrical projections 11c, 12c of lower arm members 11, 12 to enhance support strength of the upper arm member 13.

In a practical embodiment of the present invention, the lower arm members 11, 12 may be fixed to the frame structure of the back rest as an upper arm member while the upper arm member 13 may be fixed to the frame structure of the seat cushion as a lower arm member.

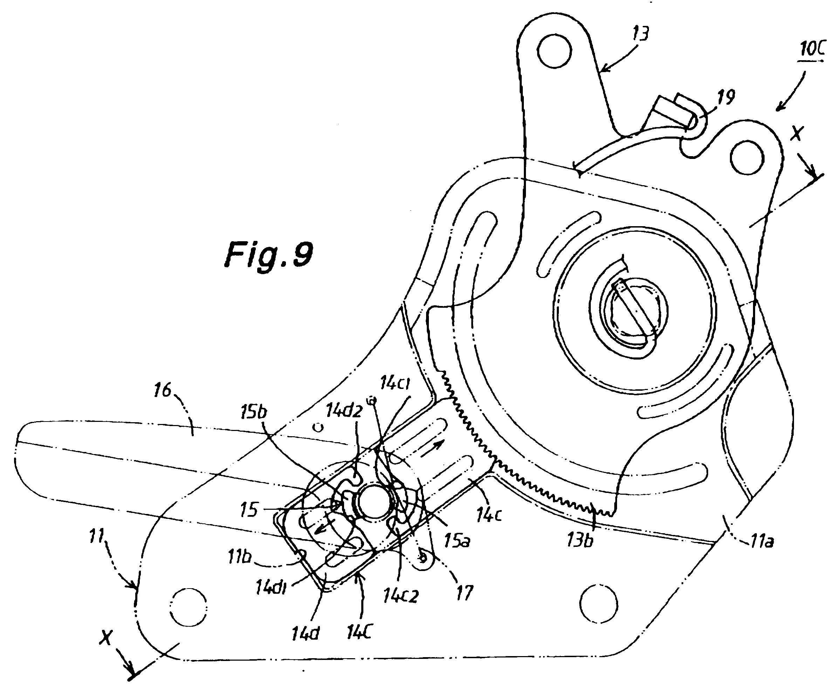

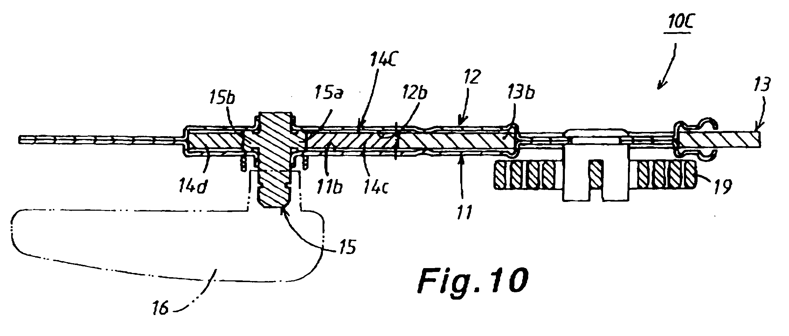

Illustrated in Figs. 9 and 10 is a modification 10C of the reclining device 10A shown in Figs. 1 and 2, wherein a pawl element 14C is provided in a different construction from the pawl element 14 in the first embodiment. The other component parts are substantially the same as those in the first embodiment and designated by the same reference numerals as in the first embodiment. In this modification, the pawl element 14C is composed of movable members 14c and 14d each cam portion of which is formed symmetrically to one another. The movable members 14c, 14d are formed with cam surfaces 14c1, 14d1 and projections 14c2, 14d2. respectively. The movable members 14c, 14d are contained within the space between the rectangular recessed portions 11b, 12b of lower arm members 11, 12 as in the first embodiment in such a manner that the cam portions 15a and 15b of cam shaft 15 are located between the cam portions of movable members 14c and 14d. In a condition where the operation lever 16 is in its locked position as shown in Figs. 9 and 10, the cam portion 15a of cam shaft 15 is engaged with the cam surface 14c1 of movable member 14c under the load of coil spring 17 to maintain a toothed portion of movable member 14c in engagement with the toothed portion of ratchet portion 13b, while the cam portion 15b of cam shaft 15 is engaged with the cam surface 14d1 of movable member 14d under the load of coil spring 17 to maintain the movable member 14d in engagement with the rear ends of rectangular recessed portions 11b, 12b.

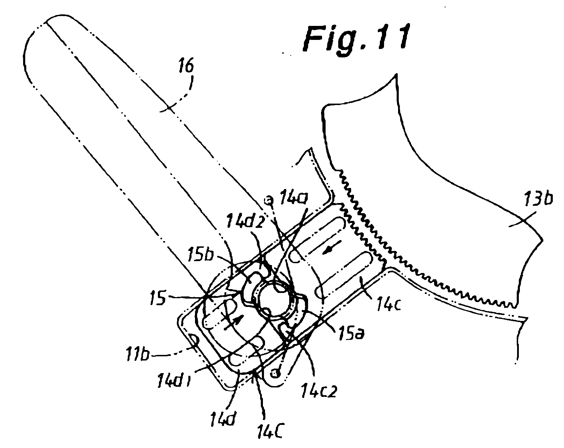

In the modified reclining device 10C, the back rest fixed to the upper arm member 13 is locked at an inclined angle relative to the seat cushion when the toothed portion of movable member 14c is maintained in engagement with the toothed portion of the ratchet portion 13b under the load of coil spring 17 to restrict rotary movement of the upper arm member 13. When the operation lever 16 is operated against the load of coil spring 17 to rotate the cam shaft 15 clockwisely as shown in Fig. 11, the cam portion 15a of cam shaft 15 is disengaged from the cam surface 14c1 and brought into engagement with the projection 14c2 of movable member 14c while the cam portion 15b of cam shaft 15 is disengaged from the cam surface 14d1 and brought into engagement with the projection 14d2 of movable member 14d. Thus, the movable members 14c and 14d are retracted by rotation of the cam shaft 15, and the toothed portion of movable member 14c is disengaged from the toothed portion of ratchet portion 13b to release the locked condition of the upper arm member 13. In such a released condition of the upper arm member 13, the back rest can be moved forwardly or backwardly to adjust its inclined position. When the effort applied to the operation lever 16 is released after the inclined position of the back rest has been adjusted, the cam shaft 16 is rotated counterclockwisely by the biasing force of coil spring 17 to bring the movable member 14c into engagement with the ratchet portion 13b of upper arm member 13 as shown in Figs. 9 and 10.

In the reclining device 10C described above, the cam portions 15a and 15b of cam shaft 15 are maintained in engagement with the cam surfaces 14c1, 14d1 of movable members 14c and 14d respectively in a locked condition of the operation lever 16 to engage the toothed portion of movable member 14c with the ratchet portion 13b of upper arm member 13 and to engage the movable member 14d with the read ends of rectangular recessed portions 11b, 12b of lower arm members 11, 12. In such arrangement of the movable members 14c and 14d in relation to the cam portions 15a and 15b of cam shaft 15, an excessive load applied to the back rest is received by the rear ends of rectangular recessed portions 11b, 12b of lower arm members 11, 12 through the movable member 14c, cam shaft 15 and movable member 14d. Thus, even if the excessive load acts on the engagement portion of the movable member 14c and ratchet portion 13b, it will be broadly dispersed without acting only on the support portion of the cam shaft 15. This is useful to avoid damage of the support portion of cam shaft 15.

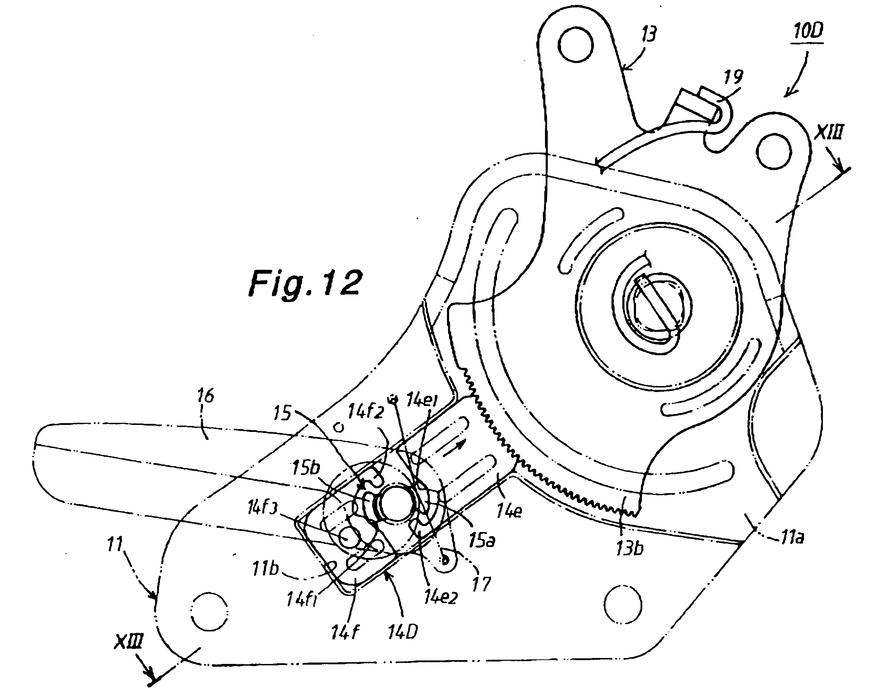

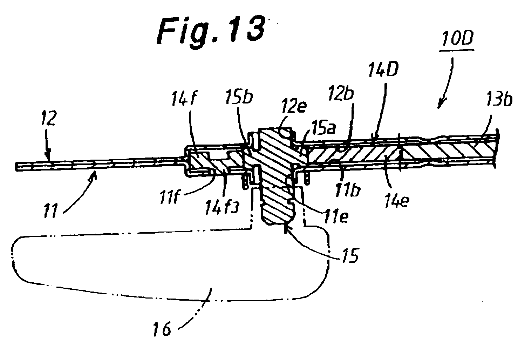

In Figs. 12 to 14 there is illustrated another modification 10D of the reclining device 10A shown in Figs. 1 and 2, wherein a pawl element 14D is provided in a different construction from the pawl element 14C in the reclining device 10C shown in Figs. 9 and 10, and wherein the through holes 11e, 12e formed in the lower arm members 11, 12 each are in the form of an elongated hole. The other component parts of reclining device 10D are substantially the same as those in the reclining device 10C shown in Figs. 9 and 10 and designated by the same reference numerals as in the reclining device 10C. The pawl element 14D is composed of a pair of movable members 14e and 14f which are formed with cam surfaces 14e1, 14f1 and projections 14e2, 14f2 for engagement with the cam portions 15a, 15b of cam shaft 15. In this modification, the movable member 14f is formed thereon with a projection 14f3 which is engaged with a hole 11f of lower arm member 11 as clearly shown in Fig. 13. Thus, the movable member 14f is fixed to the lower arm member 11 by engagement therewith at its projection 14f3 in a condition where it has been contained within the space between the rectangular recessed portions 11b, 12b of lower arm members 11, 12.

In the reclining device 10D, the operation lever 16 and cam shaft 15 are maintained as shown in Figs. 12 and 13 in a locked condition of the operation lever 16. In such a condition, the movable member 14e is maintained in engagement with the ratchet portion 13b of upper arm member 13 under the load of coil spring 17 to restrict rotary movement of the upper arm member 13 while the movable member 14f is retained in place by engagement with the rear ends of rectangular recessed portions 11b, 12b of lower arm members 11, 12. Thus, the back rest fixed to the upper arm member 13 is locked at an inclined angle relative to the seat cushion.

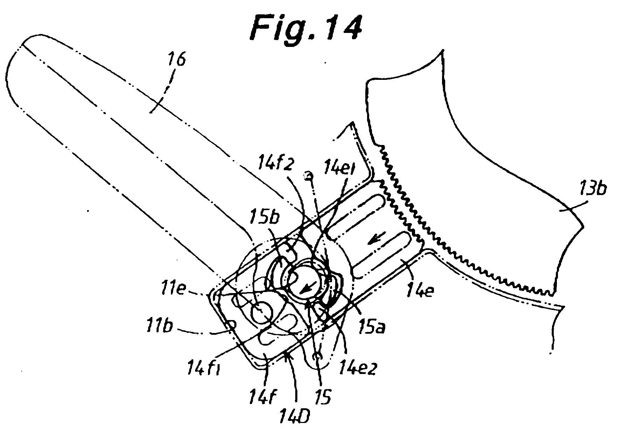

When the operation lever 16 is operated to rotate the cam shaft 15 clockwise in the figure against the load of coil spring 17 as shown in Fig. 14, the cam portion 15a of cam shaft 15 is disengaged from the cam surface 14e1 and brought into engagement with the projection 14e2 of movable member 14e while the cam portion 15b of cam shaft 15 is disengaged from the cam surface 14f1 and brought into engagement with the projection 14f2 of movable member 14f. Thus, the cam shaft 15 itself retracts backward, and the movable member 14e is disengaged from the ratchet portion 13b of upper arm member 13 to release the locked condition of the upper arm relative to the lower arm members 11, 12. In such a released condition of the upper arm member 13, the back rest can be inclined forwardly or backwardly to adjust its inclined position. When the effort applied to the operation lever 16 is released after the inclined position of the back rest has been adjusted, the cam shaft 15 is moved forward by the biasing force of coil spring 17 and is rotated counterclockwisely to bring the movable member 14e into engagement with the ratchet portion 13b of upper arm member 13 as shown in Figs. 12 and 13.

In the reclining device 10D described above, the cam portions 15a and 15b of cam shaft 15 are maintained in engagement with the cam surfaces 14e1, 14f1 of movable members 14e and 14f respectively in a locked condition of the operation lever 16 to engage the toothed portion of movable member 14e with the ratchet portion 13b of upper arm member 13 and to engage the movable member 14f with the rear ends of rectangular recessed portions 11b, 12b of lower arm members 11, 12. In such arrangement of the movable members 14e and 14f in relation to the cam portions 15a and 15b of cam shaft 15, an excessive load applied to the back rest is received by the rear ends of rectangular recessed portions 11b, 12b of lower arm members 11, 12 through the movable member 14e, cam shaft 15 and movable member 14f and received by the fixed portion of the movable member 14f to the lower arm member 11. Thus, even if the excessive load acts on the engagement portion of the movable member 14e and ratchet portion 13b, it will be broadly dispersed without acting only on the support portion of the cam shaft 15. This is useful to avoid damage of the support portion of cam shaft 15.

Since in the reclining device 10D, the cam shaft 15 is rotated and moved backward along with the elongated holes 11e, 12e in operation of the operation lever 16, the operation amount of lever 18 can be reduced in comparison with the operation lever in the reclining device 10C shown in Figs. 9 and 10.

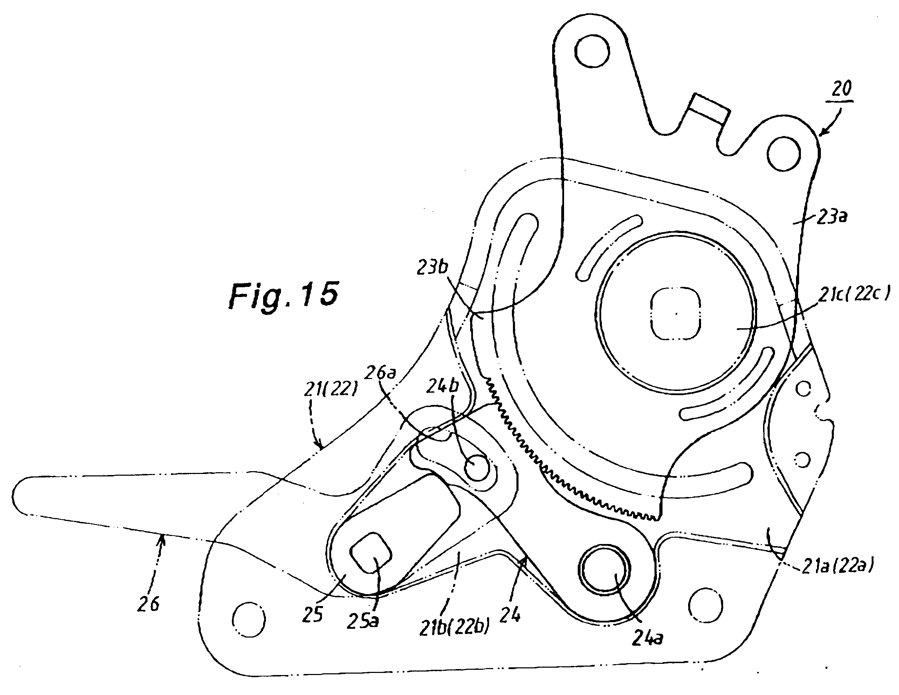

Illustrated in Fig. 15 is a second embodiment of a reclining device 20 in accordance with the present invention wherein a pawl element 24 is arranged to be rotated in a different construction from the reclining device 10A shown in Figs. 1 and 2. The other component parts and construction of the reclining device 20 are substantially the same as those in the reclining device 10A and designated by similar reference numerals with the number 20. In the reclining device 20, the pawl element 24 is contained within the space between recessed portions 21b. 22b of lower arm members 21, 22 in the same manner as in the reclining device 10A shown in Figs. 1 and 2 and is rotatably carried by a lateral support pin 24a fixed to the lower arm members 21, 22. The pawl element 24 is received by engagement with a cam member 25 which is contained within the space between the recessed portions 21b, 22b of lower arm members 21, 22 and mounted on a cam shaft 25a for rotation therewith. The cam shaft 25a is rotatably supported from the lower arm members 21, 22 and connected at its one end with an operation lever 26 which is formed with a semi-circular cam slot 26a. A follower pin 24b is fixed to a movable end portion of pawl element 24 and engaged with the semi-circular cam slot 26a of operation lever 28. In a condition where the operation lever 26 is retained in a locked condition as shown by an imaginary line in the figure, the pawl element 24 is received by the cam member 25 and maintained in meshing engagement with a ratchet portion 23b of an upper arm member 23a. When the operation lever 26 is operated to rotate the cam shaft 25 clockwisely, the cam member 25 is disengaged from the pawl element 24, and the follower pin 24b is moved downward by slidable engagement with the cam slot 26a to disengage the pawl element 24 from the ratchet portion 23b of upper arm member 23a.

Since in the reclining device 20, the ratchet portion 23b of upper arm member 23a, the pawl element 24, the cam member 26 are contained within the space between the recessed portions 21b, 22b of lower arm members 21, 22 and supported by slidable engagement with the internal surfaces of lower arm members 21, 22, an excessive load applied to the back rest is received by the lower arm members 21, 22. Thus, even if the excessive load acts on the engagement portion of the pawl element 24 with the ratchet portion 23b of upper arm member 23a, there will not occur any undesired lateral slide or damage at the engagement portion of the pawl element 24 with the ratchet portion 23b of upper arm member 23a.

## Claims

1. A reclining mechanism for a vehicle seat including a lower arm member (11) for attachment to a frame structure of a seat cushion, an upper arm member (13) for attachment to a frame structure of a back rest and connected to the lower arm member (11) to support the back rest at an inclined angle relative of the seat cushion, a ratchet (13b) integral with one of the arm members, a pawl element (14) supported on the other arm member to be moved toward and away from a semi-circular toothed portion (13c) of the ratchet (13b), resilient means (17) for biasing the pawl element (14) toward the toothed portion of the ratchet for engagement therewith, and an operation lever (16) operatively connected to the pawl element (14) to move the pawl element against a biasing force of the resilient means for disengagement from the toothed portion of the ratchet,
wherein said lower arm member is composed of a pair of arm members (11, 12) each formed with a recessed portion (11a, 11b, 12a. 12b) located at their insides and coupled with each other in such a manner that said ratchet (13b) and said pawl element (14) are contained within a space formed between said recessed portions (lla, 11b, 12a, 12b) and supported by slidable engagement with internal surfaces of said recessed portions, characterised in that at least one of said arm members (11, 12) is formed at its inside with a cylindrical projection (11c) concentric with the rotary fulcrum of said upper arm member (13) for slidable engagement with said ratchet (13b).

2. A reclining mechanism for a vehicle seat as claimed in Claim 1, wherein each recessed portion of said arm members (11, 12) is composed of a semi-circular recessed portion (11a, 12a) formed concentrically with the rotary fulcrum of said upper arm member (13) to contain said ratchet (13b) and a rectangular recessed portion (11b, 12) extended from said semi-circular recessed portion (11a, 12a) perpendicularly to a tangent of the semi-circular toothed portion (13c) of said ratchet (13b) and formed to contain said pawl element (14), and wherein said pawl element (14) is formed with a cam hole (14b) in which located is a cam portion (15a, 15b) of a cam shaft (15) rotatably supported from said arm members (11, 12) and connected at one end thereof with said operation lever (16).

3. A reclining mechanism for a vehicle seat as claimed in Claim 2, wherein said pawl element (14) is composed of front and rear movable members (14c, 14d) respectively formed with cam surfaces (14c1, 14d1) and projections (14c2, 14d2) opposed to one another for engagement with a pair of cam portions (15a, 15b) of said cam shaft (15), and wherein the cam portions (15a, 15b) of said cam shaft are engaged with the cam surfaces (14c1, 14d1) of said movable members in a released condition of said operation lever to maintain a toothed portion of said front movable member (14c) in engagement with the toothed portion (13c) of said ratchet (13b) and to maintain said rear movable member (14d) in engagement with a rear end of said rectangular recessed portion (11b, 12b) and are brought into engagement with the projections (14c2, 14d2) of said movable members (14c, 14d) in operation of said operation lever against the biasing force of said resilient means (17) to disengage said front movable member (14c) from the toothed portion (13c) of said ratchet (13b).--

4. A reclinining mechanism for a vehicle seat as claimed in Claim 2, wherein said pawl element (14) is composed of front and rear movable members (14e, 14f) respectively formed with cam surfaces (14e1, 14f1) and projections (14e2, 14f2) opposed to one another for engagement with a pair of cam portions (15a, 15b) of said cam shaft (15), said front movable member (14e) being slidable in said rectangular recessed portion (11b, 12b) while said rear movable member (14f) being fixed in place in said rectangular recessed portion (11b, 12b), wherein said cam shaft (15) is supported by elongated holes (11e, 12e) formed in said arm members (11, 12) in a moving direction of said front movable member (14e), and wherein the cam portions (15a, 15b) of said cam shaft are engaged with the cam surfaces (14e1, 14f1) of said front and rear movable members (14e, 14f) in a released condition of said operation lever to maintain a toothed portion of said front movable member (14e) in engagement with the toothed portion (13c) of said ratchet (13b) and are brought into engagement with the projections (14e2, 14f2) of said movable members (14e, 14f) in operation of said operation lever against the biasing force of said resilient means (17) to disengage said front movable member (14e) from the toothed portion (13c) of said ratchet (13b).

## Patentansprüche

1. Neigungsverstellmechanismus für einen Fahrzeugsitz, der ein unteres Armbauteil (11) zur Anbringung an ein Rahmenwerk eines Sitzpolsters aufweist, ein oberes Armbauteil (13) zur Anbringung an ein Rahmenwerk einer Rückenlehne, welches mit dem unteren Armbauteil (11) verbunden ist, um die Rückenlehne bei einem geneigten Winkel relativ zu dem Sitzpolster zu unterstützen, eine Ratsche (13b), die einteilig mit einem der Armbauteile ausgeführt ist, ein Klinkenelement (14), das auf dem anderen Armbauteil unterstützt ist, um in Richtung auf einen halbrunden gezahnten Bereich (13c) der Ratsche (13b) und von diesem weg bewegt zu werden, Federmittel (17) zur Vorspannung des Klinkenelementes (14) in Richtung auf den gezahnten Bereich der Ratsche zum Inangriffbringen mit diesem, und einen Bedienungshebel (16), der operativ verbunden ist mit dem Klinkenelement (14), um das Klinkenelement gegen eine Vorspannkraft des Federmittels zum Entkoppeln von dem gezahnten Bereich der Ratsche zu bewegen, wobei das untere Armbauteil aus einem Paar von Armbauteilen (11, 12) zusammengesetzt ist, von denen jedes mit einem ausgesparten Bereich (11a, 11b, 12a, 12b) geformt ist, welcher an deren Innenseiten angeordnet ist, und die jeweils miteinander in einer derartigen Weise gekoppelt sind, daß die Ratsche (13b) und das Klinkenelement (14) innerhalb eines Raumes enthalten sind, welcher zwischen den ausgesparten Bereichen (11a, 11b, 12a, 12b) geformt sind, und die unterstützt sind durch eine gleitbare Ankopplung mit innenliegenden Oberflächen der ausgesparten Bereiche, **dadurch gekennzeichnet**, daß wenigstens eines der Armbauteile (11, 12) an dessen Innenseite mit einem zylindrischen Vorsprung (11c) versehen ist, der konzentrisch mit dem Drehpunkt des oberen Armbauteils (13) ist, um gleitbar mit der Ratsche (13b) anzukoppeln.

2. Neigungsverstellmechanismus für einen Fahrzeugsitz nach Anspruch 1, **dadurch gekennzeichnet**, daß jeder ausgesparte Bereich der Armbauteile (11, 12) aus einem halbrunden ausgesparten Bereich (11a, 12a) besteht, der konzentrisch mit dem Drehpunkt des oberen Armbauteils (13) ausgebildet ist, um die Ratsche (13b) zu enthalten, und einem rechtwinkligen ausgesparten Bereich (11b, 12), der sich von dem halbkreisförmigen ausgesparten Bereich (11a, 12a) senkrecht zu einer Tangente des halbkreisförmigen gezahnten Bereichs (13c) der Ratsche (13b) erstreckt und ausgebildet ist, um das Klinkenelement (14) zu enthalten, und wobei das Klinkenelement (14) mit einem Mitnehmerausschnitt (14b) versehen ist, in welchem ein Mitnehmerbereich (15a, 15b) einer Mitnehmerwelle (15) angeordnet ist, die drehbar von den Armbauteilen (11, 12) unterstützt wird und mit einem Ende desselben mit dem Bedienungshebel (16) verbunden ist.

3. Neigungsverstellmechanismus für einen Fahrzeugsitz nach Anspruch 2, **dadurch gekennzeichnet**, daß das Klinkenelement (14) aus vorderen und rückwärtigen bewegbaren Bauteilen (14c, 14d) zusammengesetzt ist, die jeweils mit Mitnehmeroberflächen (14c1, 14d1) und Vorsprüngen (14c2, 14d2) ausgebildet sind, die einander zur Koppelung mit einem Paar von Mitnehmerbereichen (15a, 15b) der Mitnehmerwelle (15) gegenüberliegen, und wobei die Mitnehmerbereiche (15a, 15b) der Mitnehmerwelle mit den Mitnehmeroberflächen (14c1, 14d1) der bewegbaren Bauteile in einem freigegebenen Zustand des Bedienungshebels angekoppelt sind, um einen gezahnten Bereich des vorderen bewegbaren Bauteils (14c) in Ankopplung mit dem gezahnten Bereich (13c) der Ratsche (13b) zu halten, und um das rückwärtige bewegbare Bauteil (14d) in Ankoppelung mit einem rückwärtigen Ende des rechtwinkligen ausgesparten Bereichs (11b, 12b) zu halten, und sind in Ankopplung mit den Vorsprüngen (14c2, 14d2) der bewegbaren Bauteile (14c, 14d) bei Betätigung des Bedienungshebels entgegen der Vorspannkraft des Federmittels (17) gebracht, um das vordere bewegbare Bauteil (14c) von dem gezahnten Bereich (13c) der Ratsche (13b) zu entkoppeln.

4. Ein Neigungsverstellmechanismus für einen Fahrzeugsitz nach Anspruch 2, **dadurch gekennzeichnet**, daß das Klinkenelement (14) aus vorderen und rückwärtigen bewegbaren Bauteilen (14e, 14f) zusammengesetzt ist, die jeweils mit Mitnehmeroberflächen (14e1, 14f1) und Vorsprüngen (14e2, 14f2) ausgeformt sind, die jeweils einander gegenüberliegend zur Ankoppelung mit einem Paar von Mitnehmerbereichen (15a, 15b) der Mitnehmerwelle (15) angeordnet sind, wobei das vordere bewegbare Bauteil (14e) gleitbar in dem rechtwinkeligen ausgesparten Bereich (11b, 12b) angeordnet ist, während das rückwärtige bewegbare Bauteil (14f) an seinem Platz in dem rechtwinkligen ausgesparten Bereich (11b, 12b) fixiert ist, wobei die Mitnehmerwelle (15) durch langgestreckte Ausschnitte (11e, 12e) unterstützt wird, die in den Armbauteilen (11, 12) in einer Bewegungsrichtung des vorderen bewegbaren Bauteils (14e) eingeformt sind, und wobei die Mitnehmerbereiche (15a, 15b) der Mitnehmerwelle mit den Mitnehmeroberflächen (14e1, 14f1) der vorderen und rückwärtigen bewegbaren Bauteile (14e, 14f) in einem freigegebenen Zustand des Bedienungshebels angekoppelt sind, um einen gezahnten Bereich des vorderen bewegbaren Bauteils (14e) in Ankoppelung mit dem gezahnten Bereich (13c) der Ratsche (13b) zu halten, und sind in Ankoppelung mit den Vorsprüngen (14e2, 14f2) der bewegbaren Bauteile (14e, 14f) bei Betätigung des Bedienungshebels entgegen der Vorspannungskraft des Federmittels (17) gebracht, um das vordere bewegbare Bauteil (14e) von dem gezahnten Bereich (13c) der Ratsche (13b) zu entkoppeln.

## Revendications

1. Mécanisme d'inclinaison de siège de véhicule, comprenant un organe (11) à bras inférieur destiné à être fixé à une structure de châssis d'un coussin d'assise, un organe (13) à bras supérieur destiné à être fixé à une structure de châssis d'un dossier et raccordé à l'organe (11) à bras inférieur pour le support du dossier suivant une inclinaison par rapport au coussin d'assise, un organe d'encliquetage (13b) solidaire de l'un des organes à bras, un élément à cliquet (14) supporté par l'autre organe à bras afin qu'il se rapproche et s'éloigne d'une partie dentée en demi-cercle (13c) de l'élément d'encliquetage (13b), un dispositif élastique (17) destiné à rappeler l'élément à cliquet (14) vers la partie dentée de l'élément d'encliquetage afin qu'il coopère avec lui, et un levier de manoeuvre (16) raccordé pendant le fonctionnement à l'élément à cliquet (14), afin qu'il déplace l'élément à cliquet malgré la force de rappel du dispositif élastique et le sépare de la partie dentée de l'élément d'encliquetage,
dans lequel l'organe à bras inférieur est composé de deux organes à bras (11, 12) formés chacun d'une partie évidée (11a, 11b, 12a, 12b) placée à l'intérieur et couplés mutuellement de manière que l'élément d'encliquetage (13b) et l'élément à cliquet (14) soient contenus dans un espace formé entre les parties évidées (11a, 11b, 12a, 12b) et supportés par coopération coulissante avec des surfaces internes des parties évidées, caractérisé en ce que l'un au moins des organes à bras (11, 12), comporte, vers l'intérieur, une saillie cylindrique (11c) concentrique du pivot de rotation de l'organe à bras supérieur (13) afin qu'il coopère par coulissement avec l'élément d'encliquetage (13b).

2. Mécanisme d'inclinaison d'un siège de véhicule selon la revendication 1, dans lequel chaque partie évidée d'organe à bras (11, 12) est composée d'une partie évidée en demi-cercle (11a, 12a) formée concentriquement au pivot rotatif de l'organe à bras supérieur (13) afin qu'elle contienne l'organe d'encliquetage (13b) et une partie évidée rectangulaire (11b, 12) dépassant de la partie évidée en demi-cercle (11a, 12a) perpendiculairement à une tangente à la partie dentée en demi-cercle (13c) de l'élément d'encliquetage (13b) et formée afin qu'elle contienne l'élément à cliquet (14), et dans lequel l'élément à cliquet (14) est formé avec un trou (14b) de came dans lequel est placée une partie de came (15a, 15b) d'un arbre à came (15) supporté afin qu'il tourne sur les organes à bras (11, 12) et raccordé à une première extrémité au levier de manoeuvre (16).

3. Mécanisme d'inclinaison pour siège de véhicule selon la revendication 2, dans lequel l'élément à cliquet (14) est composé d'organes mobiles avant et arrière (14c, 14d) respectivement ayant des surfaces de came (14c1, 14d1) et des saillies (14c2, 14d2) opposées mutuellement afin qu'elles coopèrent avec deux parties de came (15a, 15b) de l'arbre à came (15), et dans lequel les parties de came (15a, 15b) de l'arbre à came sont en coopération avec les surfaces de came (14c1, 14d1) des organes mobiles à l'état libéré du levier de manoeuvre afin qu'une partie dentée de l'organe mobile avant (14c) soit maintenue en coopération avec la partie dentée (13c) de l'élément d'encliquetage (13b) et que l'organe mobile arrière (14d) soit maintenu en coopération avec une extrémité arrière de la partie évidée rectangulaire (11b, 12b) et soit mise en coopération avec les saillies (14c2, 14d2) des organes mobiles (14c, 14d) pendant la manoeuvre du levier de manoeuvre malgré la force de rappel du dispositif élastique (17) afin que l'organe mobile avant (14c) soit séparé de la partie dentée (13c) de l'organe d'encliquetage (13b).

4. Mécanisme d'inclinaison pour siège de véhicule selon la revendication 2, dans lequel l'élément à cliquet (14) est composé d'organes mobiles avant et arrière (14e, 14f) formés respectivement avec des surfaces de came (14e1, 14f1) et des saillies (14e2, 14f2) opposées mutuellement afin qu'elles coopèrent avec une paire de parties de came (15a, 15b) de l'arbre à came (15), l'organe mobile avant (14e) pouvant coulisser dans la partie évidée rectangulaire (11b, 12b) alors que l'organe mobile arrière (14f) est fixé en place dans la partie évidée rectangulaire (11b, 12b), dans lequel l'arbre à came (15) est supporté par des trous allongés (11e, 12e) formés dans les organes à bras (11, 12) dans la direction de déplacement de l'organe mobile avant (14e), et dans lequel les parties de came (15a, 15b) de l'arbre à came sont mises en coopération avec les surfaces de came (14e1, 14f1) des organes mobiles avant et arrière (14e, 14f) à l'état libéré du levier de manoeuvre, afin qu'une partie dentée de l'organe mobile avant (14e) soit maintenue en coopération avec la partie dentée (13c) de l'élément d'encliquetage (13b) et soit mise en coopération avec les saillies (14e2, 14f2) des organes mobiles (14e, 14f) pendant la manoeuvre du levier de manoeuvre, malgré la force de rappel du dispositif élastique (17) afin que l'organe mobile avant (14e) soit séparé de la partie dentée (13c) de l'organe d'encliquetage (13b).
